# EUROPÄISCHE PATENTSCHRIFT

(11) **EP 2 673 395 B1**
(45) Veröffentlichungstag und Bekanntmachung des Hinweises auf die Patenterteilung: **08.06.2016**
(21) Anmeldenummer: 12710435.4
(22) Anmeldetag: 30.01.2012
(51) Int. Cl.: C23C 28/04, C23C 22/83, F16B 33/00, C23C 28/00

(54) **VERFAHREN ZUR HERSTELLUNG PHOSPHATIERTER SCHRAUBEN**
METHOD OF PRODUCING PHOSPHATED SCREWS
PROCÉDÉ DE PRODUCTION DE VIS PHOSPHATÉE

(30) Priorität: 09.02.2011 DE 202011002554 U
(43) Veröffentlichungstag der Anmeldung: 18.12.2013
(73) Patentinhaber: Richard Bergner Holding GmbH & Co. KG, 91126 Schwabach (DE)
(72) Erfinder: SCHRAER, Thorsten, 85302 Gerolsbach (DE)
(74) Vertreter: FDST Patentanwälte
(86) Internationale Anmeldenummer: PCT/DE2012/200005
(87) Internationale Veröffentlichungsnummer: WO 2012/107039

(56) Entgegenhaltungen:
- JP-A- 2004 232 757
- US-A- 3 615 895
- US-A- 5 391 240
- US-A- 6 159 547

## Beschreibung

### Technisches Gebiet

Die vorliegende Erfindung betrifft ein Verfahren zur Herstellung phosphatierter Schrauben.

### Stand der Technik

In der Autoindustrie werden derzeit alle innermotorischen Schrauben phosphatiert und anschließend geölt, um eine gewisse Korrosionsbeständigkeit sowie einen eingestellten Reibwert nach VDA- beziehungsweise OEM-Norm zu erhalten. Dabei ist das Problem, dass die Schrauben wegen des erforderlichen Ölens so ölig sind, dass sich Ölreste in den Transportverpackungen sammeln, welche vor Rückführung gewaschen werden müssen. Des Weiteren verdreckt das überschüssige Öl die Anlagen für die automatisierte Montage. Diese Anlagen müssen dadurch häufig gereinigt werden, wodurch ein unnötiger Anlagenstillstand entsteht. Durch das aufgebrachte Öl wird außerdem sämtlicher Schmutz und Abrieb, der mit den Schrauben in Kontakt kommt, an ihnen haften bleiben. Dies kann bei größeren Fremdkörpern zu Fehlverschraubungen führen. Dokumente US 3,615,895 und US 5,391,240 offenbaren phosphatierte metallische Oberflächen mit silikatischen Versiegelungen. JP 2004232757 offenbart phosphatierte Schranben, die nach einer Entferhung der Phosphatschicht gewalzt werden.

### Darstellung der Erfindung

Ausgehend von diesem Stand der Technik ist es daher Aufgabe der vorliegenden Erfindung, ein Verfahren zur Herstellung phosphatierter Schrauben zu schaffen, die nicht geölt werden müssen, und trotzdem die erforderliche Korrosionsbeständigkeit und insbesondere den vorgegebenen Reibwert aufweisen.

Zur Lösung dieses Problems wurde bisher versucht, Schrauben mit Gleitlacken und ähnlichern zu versehen. Gleitlacke haben aber den Nachteil, dass sie entweder eine zu große Schichtdicke aufweisen, zu großen Abrieb erzeugen oder nicht hinreichend druckstabil sind.

Weiter wurde versucht, andere Ölmischungen zu verwenden. Auch dies ergab jedoch kein befriedigendes Ergebnis.

Erfindungsgemäß wird die oben genannte Aufgabe erstmals dadurch gelöst, dass die phosphatierte Schraube nach der Phosphatierung mit einer silikatischen Versiegelung versehen wird und

die Schraube erst nach dem Phosphatieren und nach dem Aufbringen der silikatischen Versiegelung gewalzt wird. Dabei drücken sich Phosphatflitter in die Gewindeflanken ein und beeinflussen dort das Reibverhalten. Dies kann auch mit dem Silikat bewirkt werden.

### Bester Weg zur Ausführung der Erfindung

Die vorliegende Erfindung schlägt erstmals vor, phosphatierte Schrauben mit silikatischen Versiegelungen, beispielsweise dem Produkt Delta-Protekt® VH301 GZ der Firma Dörken MKS-Systeme GmbH & Co. KG, Herdecke oder dem Produkt Plus ® VL PLS0218 von der Firma Dacral S.A., Creil, Frankreich, zu versehen. Solche silikatischen Versiegelungen wurden bisher nur auf so genannten Zinklamellenoberflächen verwendet. Eine Verwendung auf der Phosphatschicht einer phosphatierten Schraube zur Steigerung des Korrosionsschutzes sowie zur Erreichung eines eingestellten Reibwertes war bisher völlig unbekannt.

Die hier bevorzugten silikatischen Versiegelungen bestehen entweder aus einer wässrigen Lösung von 55 bis 65 % Siliciumdioxid, 35 bis 41 % Dilithiumoxid und 0,5 bis 2 % 2-Butoxy-ethanol, Ethylkarbinol als Lösungsmittel sowie Lithiumhydroxid oder einer wässrigen Lösung von 73 % des Natriumsalzes der Kieselsäure, also von Natriumsilikat mit 14 bis 19 % Acrylharz und 10 bis 11 % Polytetrafluorethylen (PTFE).

Der Vorteil der vorliegenden Erfindung beruht darauf, dass erfindungsgemäß erstmals auf phosphatierten Schrauben ein druckstabiler, abriebfester Trocken-"Schmierfilm" mit einer nur sehr geringen Schichtdicke erhalten wird.

Aufgrund der Härte der silikatischen Versiegelung kann erfindungsgemäß vorzugsweise bei einem Walzen der Schrauben nach dem Phosphatieren und nach dem Aufbringen der silikatischen Versiegelung ein besonders günstiges Reibverhalten erzielt werden.

Durch das nachträgliche Walzen drücken sich nämlich Phosphatflitter in die Gewindeflanken ein, und beeinflussen dort das Reibverhalten positiv. Gleiches geschieht mit dem Silikat.

## Patentansprüche

1. Verfahren zur Herstellung einer phosphatierten Schraube, wobei die Schraube nach der Phosphatierung mit einer silikatischen Versiegelung versehen wird, **dadurch gekennzeichnet, dass** die Schraube erst nach dem Phosphatieren und nach dem Aufbringen der silikatischen Verslegelung gewälzt wird.

## Claims

1. Method for the production of a phosphated screw, wherein the screw is provided with a siliceous sealing after phosphating, **characterised in that** the screw is rolled only after phosphating and after the application of the siliceous sealing.

## Revendications

1. Procédé pour la préparation d'une vis phosphatée, la vis étant munie après la phosphatation d'un scellement silicaté, **caractérisé en ce que** la vis est laminée seulement après la phosphatation et après l'application du scellement silicaté.
